(19) Europäisches Patentamt
European Patent Office
Office européen des brevets

(11) EP 2 313 814 B1

(12) EUROPEAN PATENT SPECIFICATION

(45) Date of publication and mention of the grant of the patent:
**30.03.2016 Bulletin 2016/13**

(51) Int Cl.:
*G05B 13/02* (2006.01)  *A42B 3/04* (2006.01)
*G06K 9/62* (2006.01)

(21) Application number: **09780729.1**

(22) Date of filing: **16.07.2009**

(86) International application number:
**PCT/EP2009/059177**

(87) International publication number:
**WO 2010/007138 (21.01.2010 Gazette 2010/03)**

(54) **A METHOD, DEVICE, AND COMPUTER PROGRAM PRODUCT FOR EVENT DETECTION WHILE PREVENTING MISCLASSIFICATION**

VERFAHREN, EINRICHTUNG UND COMPUTERPROGRAMMPRODUKT ZUR EREIGNISDETEKTION UNTER VERHINDERUNG VON FEHLKLASSIFIKATION

PROCÉDÉ, DISPOSITIF ET PRODUIT-PROGRAMME INFORMATIQUE POUR LA DÉTECTION D'ÉVÉNEMENTS TOUT EN ÉVITANT UN MAUVAIS CLASSEMENT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.07.2008 SE 0801711**
**18.07.2008 US 81865 P**

(43) Date of publication of application:
**27.04.2011 Bulletin 2011/17**

(73) Proprietor: **Hövding Sverige AB**
**211 19 Malmö (SE)**

(72) Inventor: **BEIJBOM, Oscar**
**224 71 Lund (SE)**

(74) Representative: **Bolmsjö, Erik Magnus**
**Ström & Gulliksson AB**
**Box 4188**
**S-203 13 Malmö (SE)**

(56) References cited:
• **WEIWEI WAN ET AL: "A hybrid HMM/SVM classifier for motion recognition using Î 1/4 IMU data" ROBOTICS AND BIOMIMETICS, 2007. ROBIO 2007. IEEE INTERNATIONAL CONFERENCE ON, IEEE, PISCATAWAY, NJ, USA, 15 December 2007 (2007-12-15), pages 115-120, XP031252787 ISBN: 978-1-4244-1761-2**
• **XU Y W ET AL: "A Cascaded Classifier for Pedestrian Detection" INTELLIGENT VEHICLES SYMPOSIUM, 2006 IEEE MEGUROKU, JAPAN 13-15 JUNE 2006, PISCATAWAY, NJ, USA,IEEE, 13 June 2006 (2006-06-13), pages 336-343, XP010937036 ISBN: 978-4-901122-86-3**
• **GUANGYI SHI ET AL: "Development of a Human Airbag System for Fall Protection Using MEMS Motion Sensing Technology" INTELLIGENT ROBOTS AND SYSTEMS, 2006 IEEE/RSJ INTERNATIONAL CONFERENCE ON, IEEE, PI, 1 October 2006 (2006-10-01), pages 4405-4410, XP031006818 ISBN: 978-1-4244-0258-8**
• **LAWRENCE R. RABINER: "A Tutorial on Hidden Markov Models and selected Applications in Speech Recognition" PROCEEDINGS OF THE IEEE, vol. 77, no. 2, February 1989 (1989-02), pages 257-286, XP002550447**

**Description**

**Field of the Invention**

This invention pertains in general to the field of classification using machine learning. More particularly the invention relates a method for detecting a particular type of action in a context where the system transforms smoothly from a normal situation to an action situation. The method further prevents false detection of samples from the normal situation.

**Background of the Invention**

Machine learning, which is a broad subfield of artificial intelligence, is concerned with the design and development of algorithms and techniques that allow computers to learn through iterative processes. For example, machine learning may be used to train a classifier for classifying whether a data sample should pertain to a first or second class. Classification is a procedure in which individual items are placed into groups based on quantitative information on one or more characteristics inherent in the items and based on a training set of previously labeled items.

However, a problem faced by all classification methods is that the amount of data needed for training the classifier is large for many applications, resulting in long computation times.

For example, in order to detect seismological activity, such as unusual vibrations in the ground, first a large amount of data pertaining to unusual vibrations and a large amount of data pertaining to normal vibration activity has to be collected. This data is then processed e.g. by training a classifier in order to define a dividing line or diving surface separating the class of unusual vibrations from normal vibrations. Once such a classifier has been trained, and is proved to be working, the idea is then to detect whether a new data sample or a new group of data samples may be classified into the class of unusual vibrations, and if so, this may be an indication that an earthquake is about to happen.

In many applications it is of great importance that a data sample is not misclassified to pertain to an erroneous class. For example, in vehicles having airbags it is of great importance that the airbag is not inflated during regular driving but only in those cases that an accident is occurring. Accordingly, the demand on using only relevant data when training the classifiers is of great importance and this problem is evident in every application.

WEIWEI WAN et al: "A hybrid HMM/SVM classifier for motion recognition using μTIMU data", ROBOTICS AND BIOMIMETICS, 2007. ROBIO 2007. IEEE INTERNATIONAL CONFERENCE ON, IEEE, PISCATAWAY, NJ, USA, 15 December 2007 (2007 -12-15), pages 115-120, XP031252787, ISBN: 978-1-4244-1761-2 discloses a classification process in two phases and method for triggering an airbag.

XU Y WET AL: "A Cascaded Classifier for Pedestrian Detection", INTELLIGENT VEHICLES SYMPOSIUM, 2006 IEEE MEGUROKU, JAPAN 13-15 JUNE 2006, PISCATAWAY, NJ, USA,IEEE, 13 June 2006 (2006-06-13), pages 336-343, XP01 0937036, ISBN: 978-4-901122-86-3, discloses a cascaded classifier for pedestrian detection.

GUANGYI SHI ET AL: "Development of a Human Airbag System for Fall Protection Using MEMS Motion Sensing Technology", INTELLIGENT ROBOTS AND SYSTEMS, 2006 IEEE/RSJ INTERNATIONAL CONFERENCE ON, IEEE, PI, 1 October 2006 (2006-1 0-01 ), pages 4405-4410, XP031 006818, ISBN: 978-1-4244-0258-8 discloses the use of SVM training together with μIMU to distinguish falling and normal motions.

In some applications it is currently impossible to create a trustworthy dividing line between the classes, due to difficulties associated with the smooth transformation from normal data to action data. Often data from the two classes are similar, e.g. the seismological activity just before an earthquake is about to occur may be very similar to normal seismological activity, rendering it hard to define the dividing line between unusual seismological activity and normal seismological activity.

Hence, there is a need for an improved classification method, device, computer program product, being applicable in a variety of applications, that may handle these types of problems with smooth transitions from the normal to the action class.

**Summary of the Invention**

Accordingly, the present invention preferably seeks to mitigate, alleviate or eliminate one or more of the above-identified deficiencies in the art and disadvantages singly or in any combination and solves at least the above mentioned problems by providing a method, device, computer program product, and use according to the appended patent claims.

According to an aspect a method is provided. The method comprises creating an artificial grid comprising a number of artificial grid points **x,** wherein each artificial grid point is a point in space with the same dimension as that of a number of feature vectors corresponding to a number of normal data samples being stored in a first database, wherein each feature vector of the number of feature vectors comprises a first number of features, and each feature vector being created from each normal data sample using a feature extraction algorithm, wherein the artificial grid is arranged such that no artificial grid point of the artificial grid is closer to origo than any of the number of feature vectors. The method further comprises training a classifier for each of the number of artificial grid points $x$ by utilizing:

the number of normal data samples; and
a trajectory extending from origo to each of the artificial grid points $x$ wherein $t$ denotes the points in the trajectory, resulting in a first set of trained classifiers. The method further comprises identifying a number of core action samples, which has corresponding feature vectors being created from each core action sample by using the feature extraction algorithm, wherein the feature vectors of the core action samples being differentiated from the normal feature vectors, based on the first set of trained classifiers, and action data samples stored being in a second database. Furthermore, the method comprises training a second classifier for separating the normal data samples from the core action samples by using the normal data samples and the core action samples. The method further comprises detecting if a new data sample being received from a sensor is differentiated from the normal data samples by extracting a new feature vector from the new data sample and then applying the second trained classifier on the new feature vector, and if so, creating a control signal for controlling the inflation of an airbag.

In another aspect a device for creating a trained second classifier to be used for detecting if a data sample pertains to a normal class or an action class is provided. The device comprises a processing unit configured to:

create an artificial grid comprising a number of artificial grid points $x$, wherein each artificial grid point is a point in space with the same dimension as that of a number of feature vectors corresponding to a number of normal data samples being stored in a first database, wherein each feature vector of the number of feature vectors comprises a first number of features, and each feature vector being created from each normal data sample using a feature extraction algorithm, wherein the artificial grid is arranged such that no artificial grid point of the artificial grid is closer to origo than any of the number of feature vectors; train a classifier for each of the number of artificial grid points x by utilizing:

the number of normal data samples; and
a trajectory extending from origo to each of the artificial grid points $x$ wherein $t$ denotes the points in the trajectory, resulting in a first set of trained classifiers. The processing unit is further configured to identify a number of core action samples, which has corresponding feature vectors being created from each core action sample by using the feature extraction algorithm, wherein the feature vectors of the core action samples being differentiated from the normal feature vectors, based on the first set of trained classifiers, and action data samples being stored in a second database; and train a second classifier for separating the normal data samples from the core action samples by using the normal data samples and core action samples.

In yet another aspect a use of the method is provided for inflation of an airbag when an accident is detected using the method.

An idea according to some embodiments is to provide a method of detecting a non-normal state while avoiding misclassification of a normal state. The method comprises training a classifier to detect samples of non-normal activity while avoiding misclassifications of normal activities. This method may be used in any applications where a database of samples from normal activity and a database of samples from non-normal activity are available.

The method according to some embodiments prevents misclassification of a data sample indeed pertaining to the normal class into the action class.

## Brief Description of the Drawings

These and other aspects, features and advantages of which the invention is capable of will be apparent and elucidated from the following description of embodiments of the present invention, reference being made to the accompanying drawings, in which

Fig. 1 is a flowchart of a method according to an embodiment;
Figs. 2a to 2d illustrates different grid patterns according to an embodiment;
Fig. 3 is a flowchart of an iteration for training a set of first classifiers according to an embodiment;
Fig. 4a is a diagram in which a grid point is selected, corresponding to the method step 113a according to an embodiment;
Fig. 4b is a diagram in which a trajectory is created from the grid point in Fig. 4a, corresponding to the method step 113b according to an embodiment;
Fig. 4c is a diagram in which the grid point of Fig. 4a and normal data samples are shown, which information is used to train a classifier, corresponding to the method step 113c according to an embodiment;

Fig. 4d is a diagram showing the trajectory in which the points of the trajectory of Fig. 4b that are classified to the action class are shown in black while the points of the trajectory that are classified to the normal class are shown in grey;

Fig. 4e is a diagram showing the part of the trajectory pertaining to the action class in black and the normal data samples in grey. These two data sample sets are used to train on in step 113e;

Fig. 5 is a flow chart of a method according to an embodiment;

Fig. 6 is block scheme of a device according to an embodiment; and

Fig. 7 is block scheme of an inflatable helmet according to an embodiment.

## Description of embodiments

Several embodiments of the present invention will be described in more detail below with reference to the accompanying drawings in order for those skilled in the art to be able to carry out the invention. The invention may, however, be embodied in many different forms and should not be constrained as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended patent claims. Furthermore, the terminology used in the detailed description of the particular embodiments illustrated in the accompanying drawings is not intended to be limiting of the invention.

An idea is to provide a method of efficiently determining whether a data sample may be classified to pertain to either a first class of data, such as a normal class, or to a second class of data, such as an action class. A starting point of the method is that a number of normal data samples and action data samples are known. The action data samples and normal data samples may be stored in a database. The database may comprise a number of actions, such as bicycle accidents, described in action data files. Each action data file may comprise one or several action data samples describing the course of the particular action. It may also contain samples from normal activity before and after the action. Each action data file may e.g. pertain to an accident. Each action data file may be tagged so that the samples pertaining to the actual accident are marked.

Furthermore, it is assumed that the entire data set, i.e. all normal data samples and action data samples, be such that the action distribution is similar to the normal distribution, with the same mean but with a greater variance.

However, a normal distribution of the data is not essential for the invention. Also, the method utilizes the fact that a number of normal data samples are initially known which allows for a good estimation of the normal class distribution.

It should be appreciated that the action data samples together describe the course of events from the normal state until the action is completed. For example, if the action is defined as a bicycle accident, and the normal state defines a normal movement by a user, and sensors collecting data samples e.g. describing acceleration are attached to the head of the user, the action data samples e.g. may describe the crash from impact on the user, e.g. on the legs of the user, until the users head hits the ground or other surface. Accordingly, some of the action data samples during the crash event may from an acceleration point of view be similar or identical to accelerations occurring during normal events, such as walking, bicycling etc. Accordingly, some of the action data samples will thus be regarded as belonging to the normal class, and it is the remaining action data samples differing from the normal class that are considered for further processing.

A prerequisite of the method according to some embodiments is that no misclassification of a data sample from the normal class, into the action class is allowed. However, misclassification of a data sample from the action class to the normal class is allowable. Accordingly, this means that a normal data sample, i.e. a data sample indeed pertaining to the normal class, may not be misclassified as belonging to the action class, however an action data sample, i.e. a data sample indeed pertaining to the action class, is allowed to be misclassified as belonging to the normal class.

The method may be characterized into a number of main steps.

1. Extracting feature vectors from the action data samples and normal data samples.
2. Identifying a number of core action feature vectors from the action feature vectors. Each core action feature vector pertains to an action data sample and is differentiated from the normal feature vectors. Hence, a core action feature vector is located "outside" or differentiated from all feature vectors from the normal class. The term "outside" or "differentiated from" will be explained in greater detail below.
3. Training a set of classifiers based on the core action feature vectors and a number of normal feature vectors.

A key feature of the method is the step of identifying the core action feature vectors, since this allows for subsequent prevention of misclassification of a data sample.

The method may utilize any machine-learning algorithm.

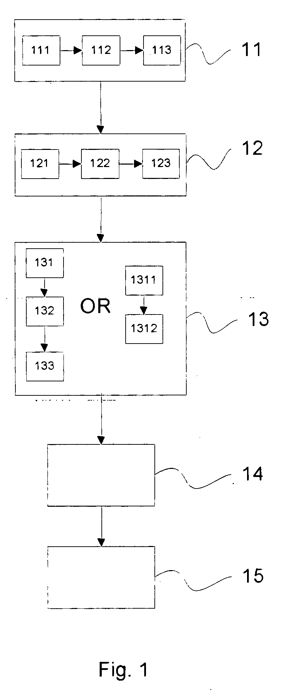

In an embodiment, according to Fig. 1, a method 10 is provided. The method comprises training 11 a first set of classifiers utilizing a set of grid points, a number of normal data samples stored in a first database, and optionally a number of action data samples stored in a second database. The normal data samples are defined to pertain to a normal class. The first set of classifiers together defines what is to be considered as "outside", i.e. differentiated from, the normal class.

Each grid point may pertain to an artificial grid point. An artificial grid point is a grid point which is not limited to pertain to a selected action feature vector. Moreover, an artificial grid point is a point in a space with same number of dimensions as the feature space, i.e. the space in which the feature vectors are represented. An artificial set of grid points may prove advantageous when only little knowledge of the database of action data samples is available, meaning that the exact conditions and setup of the stored action data samples is not known.

Alternatively, each grid point may pertain to a selected action feature vector as explained in greater detail below under section "Grid-points pertaining to selected action feature vectors" below. This approach is faster but requires that the conditions and setup of the stored action data samples is known.

**ARTIFICIAL GRID POINTS**

The method utilizing artificial grid points may further comprise identifying 12 a number of core action samples which has corresponding feature vectors being differentiated from the normal feature vectors, based on the first set of classifiers, and action data samples stored in the second database.

The step of identifying may comprise creating 123 an index vector comprising the indexes of a number of data samples. An index here means a pointer to the location of an identified action data sample stored in the database comprises action data samples. The identified action data samples are also referred to as core action samples, each associated with a core feature vector being differentiated from the normal feature vectors. Each index is created once an action feature vector, named core action feature vector, is sucessfully differentiated from the normal feature vectors, and the index then points to the location of the action data sample, i.e. core action sample, to which the core action feature vector corresponds. In order to be able to successfully differentiate an action feature vector from the normal feature vectors, first the action feature vector has to be created from an action data sample using a feature extraction algorithm, and each normal feature vector has to be created from each normal data sample using the same feature extraction algorithm. Optionally, the feature extraction algorithm may utilize a number of previous data samples together with the most recent data sample in order to create the feature vector. The feature vector is, in this case, said to correspond to the most recent data sample.

The method further comprises training 13 a second classifier for separating all normal data samples from the core action samples utilizing the normal data samples, and the created index vector together with the action data samples.

Moreover, the method may comprise detecting 14 whether a new data sample is classified to either the normal class or action class utilizing the second trained classifier, and if the new data sample is classified to the action class, creating 15 a control signal for controlling or triggering a functionality, such as inflation of an airbag, in a functionality unit.

**11. Training a first set of classifiers utilizing a set of grid points and a number of normal data samples stored in a first database.**

11.1 Feature extraction 111

In an embodiment the step of training 11 a first set of classifiers comprises performing 111 feature extraction on the normal data samples. Feature extraction means that each normal data sample is turned into a feature vector and may be performed as follows. The number of features of each feature vector, i.e. the dimension of each feature vector, is here preferably kept to a minimum due to the computational complexity discussed more in detail below. For example, the number of features could be $10 \pm 5$. Features may be selected so that as much information as possible is captured from the data sample. If applicable or possible, features may be selected so that as much information as possible is also captured from a number of previous data samples.

The number of features used may be denoted **ndims** and all feature vectors from a certain class may be denoted **feature data.** The purpose of the step of feature extraction 111 is to refine the information in the normal data samples and extract relevant information therefrom. The normal data samples could, for example, be from different sources and a feature combining information from these sources could carry more information than the raw data.

If the normal data, i.e. the number of normal data samples, is noisy, filtering is often an advantageous and sometimes necessary part of the feature extraction process.

The feature extraction may further comprise normalizing 111a each feature so that mean=0 for all features and $max \leq 1$ and $min \geq -1$.

Accordingly, after the step of feature extraction a set of first normal feature vectors, one for each normal data sample, has been created. For simplicity, the number of feature vectors is referred to as feature data below.

11.2 Grid creation 112

The step of training 11 a first set of classifiers may further comprise creating 112 an artificial hollow square grid of points with the same dimension, ndims, as the feature vectors. The grid should be large enough so that no point in the grid is closer to origo than any of the feature vectors. The number of points between the corners of the grid is denoted **nbrpoints.** If nbrpoints = 0, only points in the corners are created. The shortest distance from the corner points to the coordinate axes may be denoted **scale.** Distance in this regard may be the 2 norm, i.e. the Euclidian norm. The grid is centered around origo. The resulting grid will have:

$$(\text{nbrpoints} + 2)^{ndims} - (\text{nbrpoints})^{ndims}$$

$$\text{points.}$$

This quickly becomes a large number as ndims increase and as each grid point will generate a significant amount of computer power as explained in the following sections, and accordingly the number of features preferably is held low.

For example a grid with *ndims* = 2; *nbrpoints* = 1; *scale* = 3 will have points at:

| x | y |
|---|---|
| -3 | -3 |
| 0 | -3 |
| 3 | -3 |
| -3 | 0 |
| 3 | 0 |
| -3 | 3 |
| 0 | 3 |
| 3 | 3 |

A grid with *ndims* = 3; *nbrpoints* = 0; *scale* = 3 will have points at:

| x | y | z |
|---|---|---|
| -3 | -3 | -3 |
| 3 | -3 | -3 |
| -3 | 3 | -3 |
| 3 | 3 | -3 |
| -3 | -3 | 3 |
| 3 | -3 | 3 |
| -3 | 3 | 3 |
| 3 | 3 | 3 |

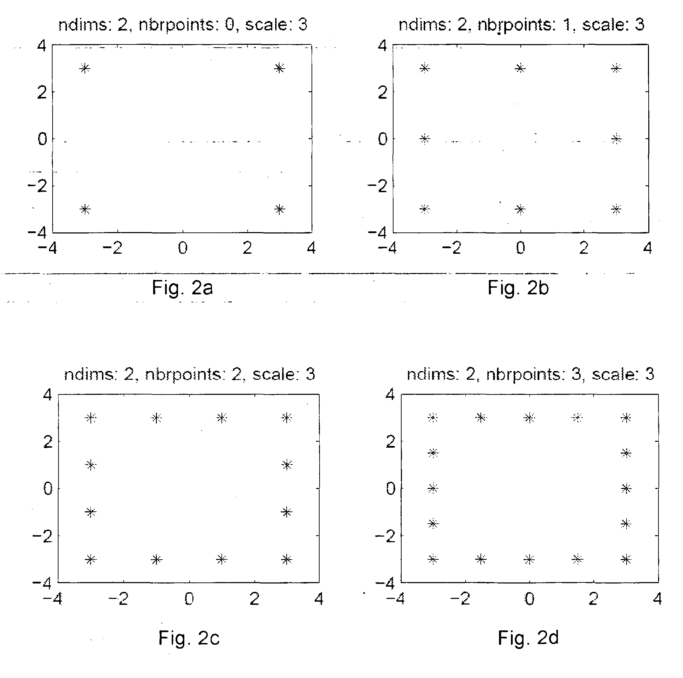

Figs. 2a to 2d illustrates different examples of two-dimensional grid patterns, which could be used in the method according to some embodiments.

11.3 Iterative definition of what is "outside" the normal feature vectors.

The step of training 11 a first set of classifiers further comprises performing 113 an iteration.

The purpose of this iteration is to iteratively define subspaces of $\mathfrak{R}_{ndims}$ that do not contain any normal features vectors.

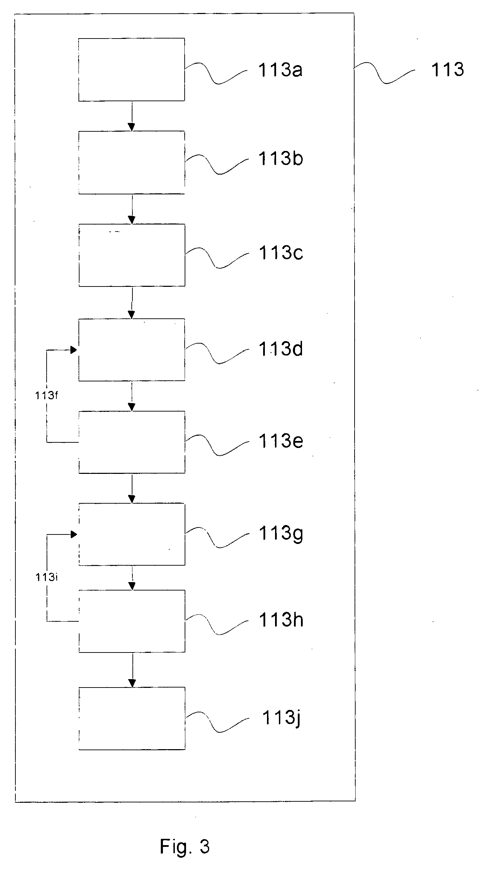

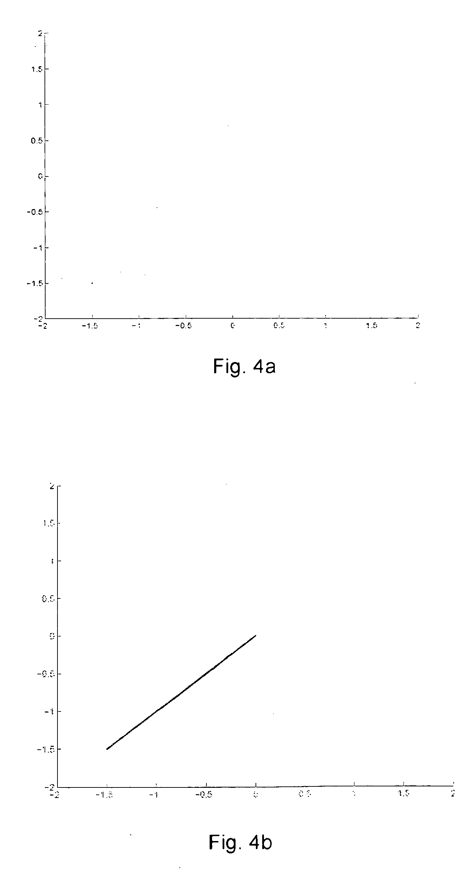

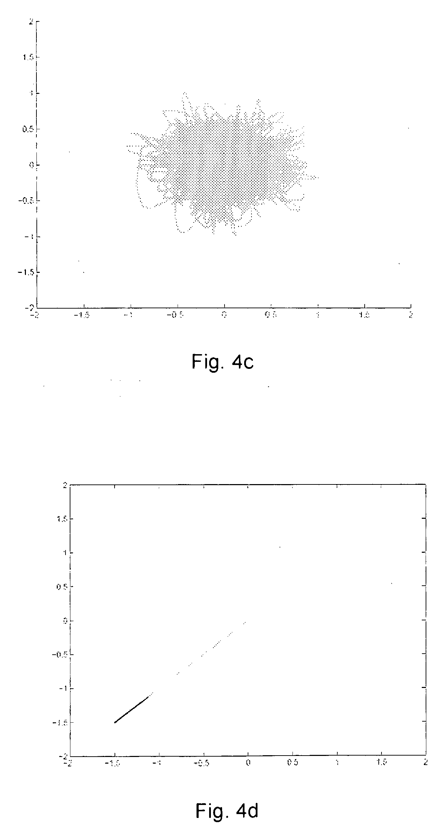

Fig. 3 illustrates a flowchart of the iteration. The iteration comprises, for each grid point x,

selecting 113a a grid point x from grid, as is illustrated in Fig. 4a, in which x exemplary is (-1.5, - 1.5),

creating 113b a trajectory, such as linear or nonlinear, from x to origo, with a user defined number of points, as is illustrated in Fig. 4b (linear), in which **t** denotes the points in this trajectory,

training 113c a classifier using the normal feature data as one class and **x** as the other, as is illustrated in Fig. 4c. The training step 113c results in a trained classifier.

As is commonly known, a classifier is used for classifying the members of a given set of objects into two groups on the basis of whether they have some property or not.

The iteration further comprises classifying 113d **t** with the trained classifier from step 113c, as is illustrated in Fig. 4d, in which the points in **t** that are classified in the **x** class (black points) are denoted **tx** and the points in **t** that are classified to the normal class are shown in grey.

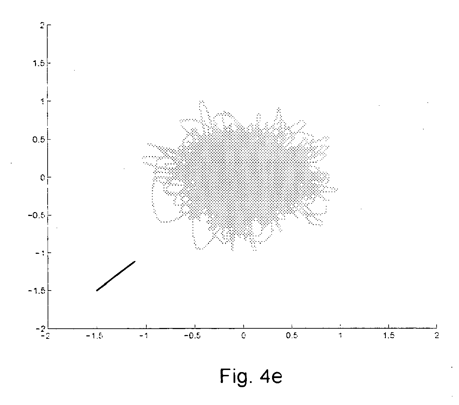

Furthermore, the iteration comprises training 113e a classifier using the *normal* feature data as one class and **tx** as the other, as is illustrated in Fig. 4e.

The iteration may further comprise repeating 113f the classification step 113d and the training step 113e until the iteration converges, i.e. that the new **tx** is the same as the one being trained on, or a certain time, denoted **runtime,** defined by a user has elapsed.

The iteration may further comprise classifying 113g the normal feature data with the last trained classifier.

The iteration further comprises determining 113h that no feature vector of the normal data samples is classified as belonging to the **x** class, by classifying each feature vector of the normal data samples with the trained classifier. Should such a feature vector exist, the determining step 113h further comprises removing the point from **tx** that is closest to origo and thus also to the set of feature vectors. Then the training step 113e is repeated.

The iteration further comprises repeating 113i the classification step 113g and determining step 113h until all feature vectors of the normal data samples are classified as belonging to the normal class.

The iteration further comprises storing 113j the trained classifier for each grid point **x.**

The iteration steps 113a to 113j is repeated for each grid point and one classifier is thus generated from each grid point, resulting in a first set of classifiers. The first set of classifiers is hereinafter referred to as *allclassifiers.* Each classifier of *allclassifiers* separate the normal data samples from a subspace of $\mathfrak{R}_1 ndims.$ These subspaces, i.e. one for each classifier in *allclassifiers,* together define what is to be considered as "outside" or differentiated from the normal data samples.

Below different kinds of parameters constituting the design of the classifier are disclosed. In an embodiment, these parameters may manually be tuned by a user to adjust what is to be defined as "outside" or differentiated from the normal data samples.

Classifier parameters are parameters constituting the design of a classifier. If, for example, Support Vector Machines with a polynomial kernel are used as machine learning algorithm, kernel dimension will determine the ability of the surfaces to follow convex cavities in $\mathfrak{R}_1 ndims$.

Another parameter is *nbrpoints.* A larger *nbrpoints* gives a greater possibility that a grid point will be radially straight outside an interesting subspace of the feature vector. A higher number of grid points *nbrpoints* will increase the possibility that the surface defined by that grid point, may be used to identify core action samples from known action data samples in that subspace, as will be further described below.

A further parameter is *scale.* This parameter describes how close the grid points are compared to the normal feature data before the procedure in this section begins.

Yet another parameter is *runtime.* This parameter determines, together with the computer speed, how many iterations the algorithm will make before the time runs out.

## 12. Identifying a number of core action samples differentiated from the normal samples

12.1 Feature extraction of action data samples

In order to be able to obtain feature vectors, such as the set of normal feature vectors, and the set of action feature vectors, feature vectors from the normal data samples and the action data samples has to be extracted. It should thus be appreciated that the step of feature extraction 111 of normal data samples and the step of feature extraction 12.1 of action data samples could be performed as two initial method steps before the actual training of classifiers is performed.

The step of identifying 12 a number of core action samples may further comprise performing 121 feature extraction of a number of known action data samples, identically as in step 111 above, and thus creating a set of action feature vectors.

12.2 Classification of each action feature vector

The step of identifying 12 a number of core action samples may further comprise classifying 122 each action feature vector with each classifier in *allclassifiers*, and if it is classified as non-normal, i.e. located "outside" the normal data samples, by any of the classifiers, the action feature vector is identified as a core action feature vector and the corresponding action data sample is identified as a core action sample.

12.3 Storing the location or index of each identified core action sample

The method may further comprise creating 123 an index vector by storing the location of each identified core action sample in an index vector.

Accordingly, by definition all of the core action samples are sampled at occasions where the state of the system is differentiated the normal system state, which means that their corresponding action feature vectors are differentiated from the normal feature vectors. Hence, once an action feature vector is successfully differentiated from the normal feature vectors, an index to its correponding action data sample may be created. Accordingly, by identifying each core action sample from the action data samples, and storing its location in the index vector, the resulting index vector will comprise the location of all core action samples.

GRID-POINTS PERTAINING TO SELECTED ACTION FEATURE VECTORS

As mentioned above selected action feature vectors may be used as grid points when the conditions and setup of the action data samples stored in the database are known. The action data samples in the database together describe the course of events from the normal state until the action is completed. In order to use action feature vectors as grid points it is crucial that the database comprises information indicating, for each accident, which action data sample that corresponds to a certain event in the action, such as the head impact in an accident.

As an alternative to the use of artificial grid points above, each grid point used for training the first set of classifiers may also pertain to the location of a selected action data sample.

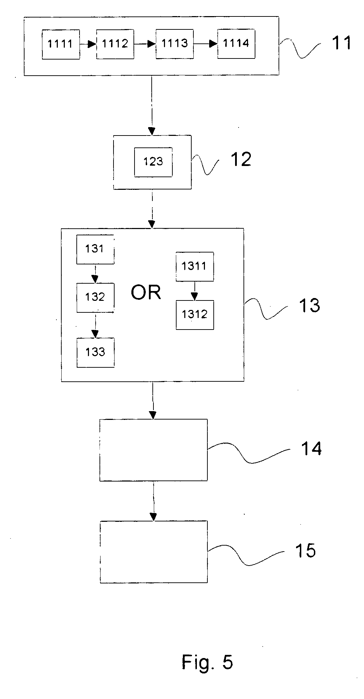

The total number of normal data samples may be divided into two subsets, subset A respective subset B, wherein each classifier of the first set of classifiers is trained using feature vectors extracted from the subset A of the normal data samples and a grid point associated with the location of an action feature vector. Feature vectors may here be extracted using a similar method as described in section 11.1.The flow chart of the method utilizing grid points pertaining to selected action feature vectors is illustrated in Fig. 5.

In an embodiment the step of training a first set of classifiers 11 comprises 1111 extracting feature vectors for all normal and action data samples, 1112, creating an action train set comprising a first feature vector corresponding to a selected action data sample associated with a certain event, such as head impact.

The method comprises the following iteration steps which runs as long as not aborted.

- a) training 1113 a first classifier based on the action train set and the subset A of the normal feature vectors to separate between the action train set and the feature vectors extracted from the subset A.
- b) classifying 1114 the feature vectors from the normal subset B with the first classifier. If any feature vector of subset B is classified as belonging to the action class the iteration is aborted.
- c) classifying 1115 all feature vectors of the action, such as accident, that corresponds to samples prior to the certain event utilizing the first classifier. If no new feature vector is classified as belonging to the action class the iteration is aborted, else the action train set is defined to comprise all feature vectors that the first classifier classified as belonging to the action class.

Once the iteration is aborted the action train set comprises all feature vectors of the action data file that are considered as being core action feature vectors. In accordance with section 12.2 above the action data samples pertaining to the core action feature vectors are defined as core action samples.

By performing the steps 1112 to 1115 for each action data file in the database the first set of classifiers, one for each action data file, is trained in step 11. Accordingly, for each action data file in the database a new action train set is created, followed by the iteration steps 1113 to 1115 above, and once the iteration is aborted, new core action feature vectors are obtained for the investigated action data file.

In this way all core action feature vectors for the action data files in the database may be identified.

The indexes of the action data samples pertaining to the identified core action feature vectors may be stored in an index vector, in the same way as described in section 12.3 above. Thus, the index vector will comprise the indexes of a number of identified action data samples whose corresponding feature vectors are differentiated from the feature vectors extracted from the normal data samples.

**13. Training a second classifier for separating all normal data samples from the core action samples utilizing the created set of indexes together with the database** of **action data samples.**

Once the core action samples have been identified, i.e. either by using artificial grid points or grid points associated with the location of selected action data samples, a second classifier is trained to separate all available normal feature vectors from all identified core action feature vectors.

The second classifier may be trained in two different ways as will be explained more in detail below.

In one first alternative embodiment the step of training 13 a second classifier may comprise selecting 131 the core action samples utilizing the index vector comprising the location of the core action samples.

Next, a new feature extraction 132 may be performed, for each core action sample, and each available normal data sample. Accordingly, a second set of normal feature vectors and a second set of core action feature vectors, having the same dimension, are created. More features than used in step 111 above may be utilized, rendering it possible to use any number that is needed to satisfactory describe the state of the system.

Generally, a larger number of features will more accurately describe the data sample and, if applicable, a number of previous data sample,, than a fewer number will. In step 132 each additional feature does not increase the computational burden as much as in step 111 above as step 133 requires much less calculations than step 113.

The feature extraction results in the creation of a second set of normal feature vectors and a second set of core action feature vectors.

Subsequently, the second classifier is trained 133 utilizing the second set of normal feature vectors, and the second set of core action feature vectors originating from the core action samples, resulting in a trained second classifier. The trained second classifier may then be used in detecting whether a new data sample is classified to either the normal class or action class in step 14 of the method according to some embodiments.

In a second preferred alternative embodiment, the second classifier is trained 1311 utilizing a known Viola Jones algorithm. The Viola Jones algorithm creates a fast and coarse classifier that is able to discard the majority of the normal feature vectors while keeping the majority of the core action feature vectors. The Viola Jones classifier is trained using all available normal feature vectors, i.e. optionally both subset A and B, and all identified core action feature vectors.

After training the Viola Jones classifier a second classifier may be trained 1312 to determine if a data sample that is not discarded by the Viola Jones classifier pertains to the action or normal class. The second classifier is trained using all normal feature vectors from both sets not discarded by the Viola Jones classifier, and all core action feature vectors not discarded by Viola Jones classifier.

The trained second classifier may then be used in detecting whether a new data sample is classified to either the normal class or action class in step 14 of the method according to some embodiments.

## 2. Device

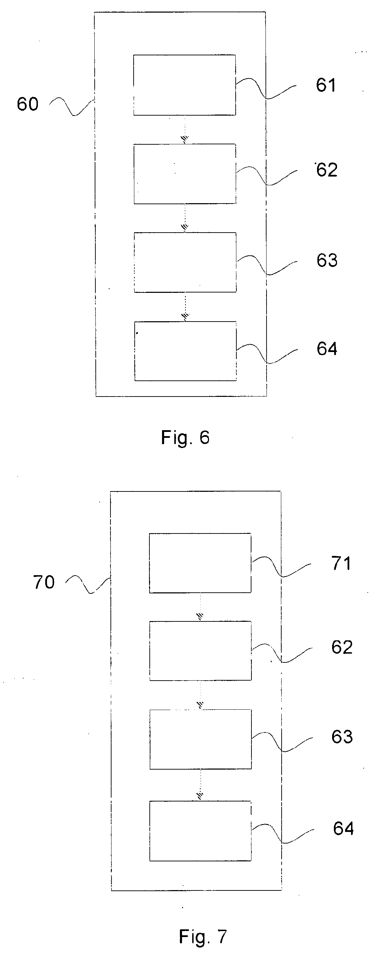

In an embodiment, according to Fig. 6, a device 60 is provided. The device comprises a processing unit 61 configured to perform method steps 11, 12, and 13 of the method. The result of these steps is a trained second classifier that may be stored on a memory for further use. The same device 60 or a separate device 70 may further comprise a detection unit 62 for performing method step 14 and a control unit 63 for performing method step 15.

The detection unit 62 may be connected to a number of sensors for receiving new data samples, and also to a memory on which the trained second classifier is stored. In this way the processing unit 61 and detection unit 62 does not need to be integrated in one single device. Moreover, the processing unit 61 requires much more computational power than the detection unit 62, since training requires much more computer power than classifying.

Accordingly, according to one embodiment the device 60 comprises

a processing unit 61 configured to:
train a first set of classifiers utilizing a set of grid points, a number of normal data samples stored in a first database, and optionally a number of action data samples stored in a second database,
identify a number of core action samples, which has corresponding feature vectors being differentiated from the normal feature vectors, based on the first set of classifiers, and action data samples stored in the second database,
train a second classifier for separating the normal data samples from the core action samples. The device 60 may further comprise a detection unit 62 that detects if a new data sample being received from a sensor is differentiated from the normal data samples by extracting a new feature vector from the new data sample, optionally together with a number of previous samples, and then applying the second trained classifier on the new feature vector, and
a control unit 63 to control or trigger a functionality in a functionality unit 64 using a control signal when the new feature vector a new data sample is differentiated from the normal data samples by said detection unit 62.

In an embodiment, according to Fig. 7, a device 70 is provided. The device 70 comprises a memory 71 onto which the trained second classifier is stored such that the trained second classifier is accessible to the detection unit, the detection unit 62 connected to at least one sensor (not shown), and the control unit 63. Furthermore, the device 70 may optionally comprise the functionality unit 64.

In an embodiment the device 60 comprises units for performing the method according to some embodiments.

The processing unit 61, detection unit 62, and control unit 63 may be any unit normally used for performing the involved tasks, e.g. a hardware, such as a processor with a memory. The processor may be any of variety of processors, such as a Digital Signal Processor (DSP). However, the scope of the invention is not limited to these specific processors.

### 3. Computer program product

The invention may be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

In an embodiment the second trained classifier is stored on a computer readable medium. The computer-readable medium may thus be used to classify whether a new data sample is differentiated from the normal class utilizing the second trained classifier.

In an embodiment a computer program product stored on a computer-readable medium is provided. The computer program product comprises software code adapted to perform the method according some embodiments.

In an embodiment the computer-readable medium comprises code segments arranged, when run by an apparatus having computer-processing properties, for performing all of the method steps defined in some embodiments.

### 4. Applications

The method according to some embodiments may be used in a large number of applications, in which it is important to prevent misclassification of data indeed pertaining to a first class into a second class and where the normal class transforms smoothly into the action class.

In an embodiment the method is utilized for detecting unusual movements of a moving body, such as accidents. After performing the steps 11 and 12, based on originally known normal data samples from normal movements, the trained classifier may determine if a new data sample, such as a data sample collected from motion sensors attached to the body and/or images of the body, pertains to the normal class or action class. Should the new data sample be classified to the action class, the method may trigger or control a functionality, such as inflating an airbag or sounding an alarm etc., based on the control signal.

The method may also be used in detecting large, unusual water waves, such as tsunamis, and based on the control signal, indicating that the new data sample is an action data sample, i.e. a tsunami data sample, controlling a functionality unit, such as an alarm device, to alert people of the imminent danger.

The method according to some embodiments may also be applied to detect earthquakes, volcanic activities or radical changes in weather patterns.

The method according to some embodiments may also be used to analyze signals from medical equipment to detect emergency situations such as unusual heart activities or unusual breathing patterns.

Accordingly, for each application a different type of sensor or sensors may be used to collect normal data samples and action data samples, in order to enable the training of a second classifier, as well as the new data samples in order to be able to detect an activity differentiated from the normal data samples. Thus, depending on the application any sensor collecting data may be used in conjunction with the method according to some embodiments.

### 5. Detection of unusual movements of a human body

The present inventors have according to an embodiment performed experiments utilizing the method for detecting a bicycle accident without falsely classifying any data samples from normal cycling activities as accident. The normal class is here data from a person riding a bicycle or doing related activities, while the action class is data from a bicycle accident. Once an accident has been detected, i.e. when a new data sample is classified to pertain to the action class using the trained second classifier, e.g. the method may trigger inflation of an airbag to protect the users body during the crash.

In an embodiment, according to Fig. 7, the device 70 is an inflatable helmet for protecting the users head during an accident is provided. The inflatable helmet 70 comprises the memory 71 onto which a second trained classifier, optionally created by the method or the device 60 according to some embodiments is stored. The inflatable helmet 70 further comprises the detection unit 62, and control unit 63 for controlling the inflation of an airbag 64 in the case of a crash which has been detected by the detection unit 62. Hence, in this embodiment the functionality unit 64 is an airbag.

For example, the method according to some embodiments may be applied to the system disclosed in the publication WO/2007/050024 for triggering inflation of the airbag when an accident is detected.

5.1 Data collection

In this embodiment, the new data samples to be processed by the detection unit 62 may originate from at least one sensor measuring acceleration in 3 dimensions and/or a gyro detecting angular speeds in 3 dimensions. The sensors and gyros may e.g. be mounted in the back of the helmet.

Another sensor that may be connected to the detection unit may be a sensor measuring the distance from the ground to the helmet. This could in turn be an apparatus utilizing sound waves, such as an air ultrasonic transducer, or any device using electromagnetic waves such as a radar or laser.

The detection unit 62 may e.g. utilize a sampling frequency of 300 Hz. A lower sampling frequency may be advantageous as it reduces the amount of calculations per second the detection unit 62 has to perform and as a consequence thus increases battery life.

5.2 Feature extraction

When a new data sample is sampled from the detectors a feature vector is created that describe the current state of the system. This feature vector comprises a number of scalar values, features, that each describes some aspect of the state of the system.

The features could comprise the most recent data samples filtered through a medium filter.

The medium filter could use between 32 and 512 data samples.

The features could also comprise the most recent data samples filtered through a median filter.

The median filter could use between 9 and 21 data samples.

The median filter efficiently removes so called "salt and pepper" noise, which means noise with extremely high frequency, often only a single data sample.

The medium and median filters could be replaced by any one of a combination of the following filters.

1) Butterworth filters,
2) Chebyshev filters type 1,
3) Chebyshev filters type 2,
4) Bessel filters, and
5) Alpha-trim filters may be used.

Filters 1), 2), 3) and 4) are well known within signal processing.

Filters 5) are more rare and work as follows: An alpha-trim filter is a combination of a median and a medium filter. It removes the highest and lowest data samples that are to be filtered, and then average the rest.

The medium and median filters could also be used together with a delay. That means that we no longer use the most recent data samples, but rather data samples from some milliseconds back. A longer filter does to some extent the same thing as a shorter with delay, however with two differences. A longer filter smoothes the data more than a short with delay. Moreover, a longer filter requires more computational power. Therefore it is preferred, once the filters are long enough to satisfactory remove signal noise, to use a shorter filter with delay.

The features could also comprise a derivative of the data samples, thus generating features describing the change in acceleration and the angular acceleration.

The features could also comprise the attitude of the system. This is possible through combining data from a first sensor in form of an accelerometer, filtered with a low pass filter, with the data from a second sensor in form of a gyro, filtered with a high pass filter.

5.3 Parameters used for identifying core action samples

5.3.1 Features extraction

In a practical implementation 12 dimensions may be used in the feature extraction step 121. A 9 point median filter and a 64 point medium filter for both gyros and accelerometers may be used to create a 12-dimensional feature vector for each data sample.

5.3.2 Grid creation

For example, *nbrpoints* may be selected to be 0. in this way $2^{12}$=4096 grid points are created. Scale may be set to 3.

5.3.3 Iterative definition of what is "outsize" the normal data samples.

For example, a Support Vector Machine, SVM, with a two dimensional polynomial kernel, to perform the classification may be used. Alternatively, instead of using a SVM, another type of machine learning algorithm, such as an artificial neural network, a combination neural network, a fuzzy logic algorithm, or a k - nearest neighbor algorithm, may be used. The parameter *runtime may be* set to 100 seconds.

5.4 Parameters used in training the second classifier

The subsections in this section correspond to the sections 13.2 and 13.3 in section 13 "Training a second classifier".

5.4.1 Features extraction

For example, 50 - 500 features may be used that describe the sensor signals in this step. Length of filters and delays may be selected based on the following. A bicycle accident takes no more than approximately 400 ms. It is therefore desired to use features that describe the states of the system over the last 400 ms. This may be achieved, for example, by using one or two short median filters, a 32 point medium filter, a 64 point medium filter and thereafter three or four, equally spaced, delayed 64 point medium filters.

Tests performed by the present inventors have indicated that no more than 64 points may be needed to remove signal noise, and therefore it is better, in order to keep the computational requirements down, to used delayed 64 point filters rather than longer filters.

Moreover, features describing the system attitude and/or features describing the changes in detector signals may be used.

5.4.2 Train a classifier

For example, the same classifier as in 5.3.3 may be used.

5.5 Testing and creating a safety margin

After training the classifier the final classification parameters may be tested on unknown data. If the classifier should classify any normal data samples as action data samples it is possible to create an extra safety margin. This is achieved through multiplying all inputs from the detectors with a number, $0 < \gamma < 1$.

In this way the signals from the sensors will be moderated and the classifier less prone of classifying a data sample to pertain to the action class.

This last step may not be meaningful in a system where the norm of the feature vectors is not connected to whether a sample belongs to the action class or normal class, for example in image classification systems.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

**Claims**

**1.** A method (10) for controlling the inflation of an airbag, comprising:

creating an artificial grid comprising a number of artificial grid points x, wherein each artificial grid point is a point in space with the same dimension as that of a number of feature vectors corresponding to a number of normal data samples being stored in a first database, wherein each feature vector of the number of feature vectors comprises a first number of features, and each feature vector being created from each normal data sample using a feature extraction algorithm, wherein the artificial grid is arranged such that no artificial grid point of the artificial grid is closer to origo than any of the number of feature vectors;

training (11) a classifier for each of the number of artificial grid points x by utilizing:

the number of normal data samples and

a trajectory extending from origo to each of the artificial grid points $x$ wherein $t$ denotes the points in the trajectory, resulting in a first set of trained classifiers;

identifying (12) a number of core action samples, which has corresponding feature vectors being created from each core action sample by using the feature extraction algorithm, wherein the feature vectors of the core action samples being differentiated from the feature vectors of the normal data samples, based on the first set of trained classifiers, and action data samples being stored in a second database;

training (13) a second classifier for separating the normal data samples from the core action samples by using the normal data samples and core action samples;

detecting (14) if a new data sample being received from a sensor is differentiated from the normal data samples by extracting a new feature vector from the new data sample and then applying the second trained classifier on the new feature vector; and if so,

creating (15) a control signal for controlling the inflation of an airbag.

**2.** The method according to claim 1, wherein the step of training (11) of a first set of classifiers is performed by:

performing (111) feature extraction on the normal data samples, resulting in a feature vector for each normal data sample having a first number of features,

creating (112) a grid of points having the same dimension as the feature vectors,

performing (113) an iteration for each grid point x comprising,

selecting (113a) a grid point x from the grid, creating (113b) a trajectory from $x$ to origo, with a user defined number of points, denoting t the points in the trajectory,

training (113c) a classifier using the first number of feature vectors as a first class and x as a second class, resulting in a trained classifier,

classifying (113d) $t$ with the trained classifier from (113c), denoting the points in $t$ that are classified in the $x$ class $tx,$

training (113e) a classifier using the first number of feature vectors as a first class and $tx$ as a second class,

repeating (113f) the classification step (113d) and the training step (113e) until the new $tx$ is the same as the one being trained on, or a certain time, denoted **runtime,** defined by a user has elapsed,

classifying (113g) the first number of feature vectors with the trained classifier,

determining (113h) if any feature vector of the normal data samples is classified as belonging to the x class, by classifying each feature vector of the normal data samples with the trained classifier, and if so, removing the point from $tx$ that is closest to origo, and repeating training step (113e),

repeating (113i) the classification step (113g) and determining step (113h) until all of the first number of feature vectors are classified as belonging to the first class, and

storing (113j) the trained classifier for each grid point x, resulting in a number of trained classifiers, one for each grid point **x.**

**3.** The method according to claim 2, wherein the step of identifying (12) a number of core action samples comprises:

performing (121) feature extraction of the number of action data samples stored in the second database, resulting in a set of action feature vectors,

classifying (122) each action feature vector with each of the first set of classifiers, and if an action feature vector is classified as not pertaining to the first class by any of the classifiers in the first set of classifiers, the corresponding action sample for each classified feature vector, is identified as a core action sample.

**4.** The method according to claim 3, further comprising storing (123) the index of each identified core action sample in an index vector.

**5.** The method according to claim 1, wherein the second database comprises a number of action data files, each describing the course of events of an accident in the form of a number of action data samples, and information indicating for each action the action data sample at which a certain event, such as head impact, is located.

**6.** The method according to claim 5, wherein said steps of training (11) and identifying (12) is performed by performing an iteration for each action data file in the second database, said iteration comprising:

creating (1111) an action train set comprising a first feature vector of a selected action data sample associated with the certain event;

training (1112) a first classifier based on the action train set and a subset A of the normal data samples to separate between the action train set and the feature vectors extracted from the subset A;

classifying (1113) the feature vectors from a subset B with the first classifier, and if any feature vector of subset B is classified as belonging to the action class the iteration is aborted; and

classifying (1114) all feature vectors of the current action data file, that corresponds to action data samples prior to the certain event utilizing the first classifier, and if no new feature vector is classified as belonging to the action class the iteration is aborted, otherwise the action train set is defined to comprise all feature vectors that the first classifier classified as belonging to the action class, and

wherein once the iteration is aborted the action train set for each action data file comprises all core action feature vectors of each action data file, and wherein the core action feature vectors correspond to a number of core action samples.

**7.** The method according to claim 6, further comprising storing the index of each identified core action sample in an index vector.

**8.** The method according to claim 4 or 7, further comprising
calculating a core feature vector for each core action samples indexed in the index vector.

**9.** The method according to claim 1 or 8, wherein the step of training a second classifier comprises:

training (1311) a Viola Jones classifier utilizing all available normal feature vectors, and all identified core action feature vectors, and

training (1312) the second classifier utilizing all available normal feature vectors not discarded by the Viola Jones classifier, and all core action feature vectors not discarded by Viola Jones classifier.

**10.** The method according to claim 8, further comprising
training (133) the second classifier utilizing the second set of normal feature vectors and the set of core action feature vectors, resulting in the trained second classifier.

**11.** A device (60) for creating a trained second classifier to be used for detecting if a data sample pertains to a normal class or an action class, comprising
a processing unit (61) configured to:

create an artificial grid comprising a number of artificial grid points x,

wherein each artificial grid point is a point in space with the same dimension as that of a number of feature vectors corresponding to a number of normal data samples being stored in a first database, wherein each feature vector of the number of feature vectors comprises a first number of features, and each feature vector being created from each normal data sample using a feature extraction algorithm, wherein the artificial grid is arranged such that no artificial grid point of the artificial grid is closer to origo than any of the number of feature vectors;

train a classifier for each of the number of artificial grid points x by utilizing:

the number of normal data samples, and
a trajectory extending from origo to each of the artificial grid points $x$ wherein $t$ denotes the points in the trajectory, resulting in a first set of trained classifiers;

identify a number of core action samples, which has corresponding feature vectors being created from each core action sample by using the feature extraction algorithm, wherein the feature vectors of the core action samples being differentiated from the feature vectors of the normal data samples, based on the first set of trained classifiers, and action data samples being stored in a second database; and

train a second classifier for separating the normal data samples from the core action samples by using the normal data samples and core action samples.

**12.** The device (60) according to claim 11, further comprising:

a detection unit (62) that detects if a new data sample being received from a sensor is differentiated from the normal data samples by extracting a new feature vector of the new data sample and then applying the second trained classifier on the new feature vector, and

a control unit (63) to control the inflation of an airbag (64) using a control signal when the new data sample is differentiated from the normal data samples by said detection unit (62).

**13.** Use of the method according to claim 1 for inflation of an airbag when an accident is detected using the method.

**Patentansprüche**

**1.** Verfahren (10) zum Steuern des Aufblasens eines Airbags, umfassend:

Erzeugen eines künstlichen Rasters, das eine Anzahl von künstlichen Rasterpunkten x umfasst, wobei jeder künstliche Rasterpunkt ein Punkt im Raum mit der gleichen Abmessung wie jener einer Anzahl von Merkmalsvektoren ist, die einer Anzahl von Normaldatenabtastungen entspricht, die in einer ersten Datenbank gespeichert sind, wobei jeder Merkmalsvektor der Anzahl von Merkmalsvektoren eine erste Anzahl von Merkmalen umfasst, und jeder Merkmalsvektor unter Verwendung eines Merkmalsextraktionsalgorithmus aus jeder Normaldatenabtastung erzeugt wird, wobei das künstliche Raster so angeordnet ist, dass kein künstlicher Rasterpunkt des künstlichen Rasters näher als ein beliebiger aus der Anzahl von Merkmalsvektoren an dem Ursprung liegt; Trainieren (11) eines Klassifikators für jeden aus der Anzahl von künstlichen Rasterpunkten x unter Verwendung

der Anzahl von Normaldatenabtastungen, und einer Bahn, die sich von dem Ursprung zu jedem der künstlichen Rasterpunkte x erstreckt, wobei *t* die Punkte auf der Bahn bezeichnet,

was einen ersten Satz von trainierten Klassifikatoren ergibt; Identifizieren (12) einer Anzahl von Kernhandlungsabtastungen, die entsprechende Merkmalsvektoren aufweist, welche unter Verwendung des Merkmalsextraktionsalgorithmus aus jeder Kernhandlungsabtastung erzeugt wurden, wobei die Merkmalsvektoren der Kernhandlungsabtastungen auf Basis des ersten Satzes von trainierten Klassifikatoren von den Merkmalsvektoren der Normaldatenabtastungen unterschieden werden, und Handlungsdatenabtastungen in einer zweiten Datenbank gespeichert werden; Trainieren (13) eines zweiten Klassifikators zum Trennen der Normaldatenabtastungen von den Kernhandlungsabtastungen unter Verwendung der Normaldatenabtastungen und der Kernhandlungsabtastungen; Feststellen (14), ob sich eine neue Datenabtastung, die von einem Sensor erhalten wird, von den Normaldatenabtastungen unterscheidet, indem aus der neuen Datenabtastung ein neuer Merkmalsvektor extrahiert wird und dann der zweite trainierte Klassifikator auf den neuen Merkmalsvektor angewendet wird; und wenn dies der Fall ist, Erzeugen (15) eines Steuersignals zur Steuerung des Aufblasens eines Airbags.

**2.** Verfahren nach Anspruch 1, wobei der Schritt des Trainierens (11) des ersten Satzes von Klassifikatoren wie folgt durchgeführt wird:

Durchführen (111) einer Merkmalsextration an den Normaldatenabtastungen, was einen Merkmalsvektor für jede Normaldatenabtastung mit einer ersten Anzahl von Merkmalen ergibt, Erzeugen (112) eines Rasters von Punkten, das die gleiche Abmessung wie die Merkmalsvektoren aufweist, Durchführen (113) einer Wiederholung für jeden Rasterpunkt x, umfassend:

Wählen (113a) eines Rasterpunkts x aus dem Raster, Erzeugen (113b) einer Bahn von x zu dem Ursprung mit einer benutzerdefinierten Anzahl von Punkten, wobei die Punkte auf der Bahn mit t bezeichnet sind, Trainieren (113c) eines Klassifikators unter Verwendung der ersten Anzahl von Merkmalsvektoren als erste Klasse und *x* als zweite Klasse, was einen trainierten Klassifikator ergibt,
Klassifizieren (113d) von *t* mit dem trainierten Klassifikator von (113c), wobei die Punkte in *t*, die in die Klasse x klassifiziert sind, als *tx* bezeichnet werden,
Trainieren (113e) eines Klassifikators unter Verwendung der ersten Anzahl von Merkmalsvektoren als erste Klasse und *tx* als zweite Klasse,
Wiederholen (113f) des Klassifizierungsschritts (113d) und des Trainingsschritts (113e), bis das neue *tx* das gleiche wie jenes ist, an dem trainiert wurde, oder eine bestimmte Zeit, eine bezeichnete Laufzeit, die durch einen Benutzer definiert wurde, vergangen ist,
Klassifizieren (113g) der ersten Anzahl von Merkmalsvektoren mit dem trainierten Klassifikator,
Bestimmen (113h), ob irgendein Merkmalsvektor der Normaldatenabtastungen als zu der Klasse *x* gehörig klassifiziert wird, indem jeder Merkmalsvektor der Normaldatenabtastungen mit dem trainierten Klassifikator klassifiziert wird, und wenn dies der Fall ist, Beseitigen des Punkts, der sich dem Ursprung am nächsten befindet, aus *tx* und Wiederholen des Trainingsschritts (113e),
Wiederholen (113i) des Klassifizierungsschritts (113g) und des Bestimmungsschritts (113h), bis alle aus der ersten Anzahl von Merkmalsvektoren als zu der ersten Klasse gehörig klassifiziert sind, und
Speichern (113j) des trainierten Klassifikators für jeden Rasterpunkt x, was eine Anzahl von trainierten Klassifikatoren, für jeden Rasterpunkt einen, ergibt.

3.  Verfahren nach Anspruch 2, wobei der Schritt des Identifizierens (12) einer Anzahl von Kernhandlungsabtastungen Folgendes umfasst:

    Durchführen (121) einer Merkmalsextraktion an der Anzahl von Handlungsdatenabtastungen, die in der zweiten Datenbank gespeichert sind, was einen Satz von Handlungsmerkmalsvektoren ergibt, Klassifizieren (122) jedes Handlungsmerkmalsvektors mit jedem aus dem ersten Satz von Klassifikatoren; und wenn ein Handlungsmerkmalsvektor durch irgendeinen der Klassifikatoren in dem ersten Satz von Klassifikatoren als nicht zu der ersten Klasse gehörig klassifiziert wird, wird die entsprechende Handlungsabtastung für jeden klassifizierten Merkmalsvektor als Kernhandlungsabtastung identifiziert.

4.  Verfahren nach Anspruch 3, ferner umfassend das Speichern (123) des Index jeder identifizierten Kernhandlungsabtastung in einem Indexvektor.

5.  Verfahren nach Anspruch 1, wobei die zweite Datenbank Folgendes umfasst: eine Anzahl von Handlungsdatendateien, die jeweils den Ablauf von Ereignissen eines Unfalls in der Form einer Anzahl von Handlungsdatenabtastungen beschreiben, und Informationen, die für jede Handlung die Handlungsdatenabtastung, bei der sich ein bestimmtes Ereignis wie etwa ein Kopfanprall befindet, angeben.

6.  Verfahren nach Anspruch 5, wobei die Schritte des Trainierens (11) und des Identifizierens (12) durch Durchführen einer Wiederholung für jede Handlungsdatendatei in der zweiten Datenbank durchgeführt wird, wobei die Wiederholung Folgendes umfasst:

    Erzeugen (1111) eines Handlungsabfolgesatzes, der einen ersten Merkmalsvektor einer gewählten Handlungsdatenabtastung, die mit dem bestimmten Ereignis verbunden ist, umfasst;
    Trainieren (1112) eines ersten Klassifikators auf Basis des Handlungsabfolgesatzes und eines Untersatzes A der Normaldatenabtastungen, um eine Trennung zwischen dem Handlungsabfolgesatz und den Merkmalsvektoren, die aus dem Untersatz A extrahiert wurden, vorzunehmen;
    Klassifizieren (1113) der Merkmalsvektoren von einem Untersatz B mit dem ersten Klassifikator, und Abbrechen der Wiederholung, wenn irgendein Merkmalsvektor des Untersatzes B als zu der Handlungsklasse gehörig klassifiziert wird; und
    Klassifizieren (1114) aller Merkmalsvektoren der gegenwärtigen Handlungsdatendatei, die Handlungsdatenabtastungen vor dem bestimmten Ereignis entspricht, unter Verwendung des ersten Klassifikators, und Abbrechen der Wiederholung, wenn kein neuer Merkmalsvektor als zu der Handlungsklasse gehörig klassifiziert wird, und andernfalls derartiges Definieren des Handlungsabfolgesatzes, dass dieser alle Merkmalsvektoren umfasst, welche durch den ersten Klassifikator als zu der Handlungsklasse gehörig klassifiziert wurden, und wobei der Handlungsabfolgesatz für jede Handlungsdatendatei, sobald die Wiederholung abgebrochen wurde, alle Kernhandlungsmerkmalsvektoren jeder Handlungsdatendatei umfasst, und wobei die Kernhandlungsmerkmalsvektoren einer Anzahl von Kernhandlungsabtastungen entsprechen.

7.  Verfahren nach Anspruch 6, ferner umfassend das Speichern des Index jeder identifizierten Kernhandlungsabtastung in einem Indexvektor.

8. Verfahren nach Anspruch 4 oder 7, ferner umfassend:

Berechnen eines Kernmerkmalsvektors für jede Kernhandlungsabtastung, die in dem Indexvektor indexiert ist.

9. Verfahren nach Anspruch 1 oder 8, wobei der Schritt des Trainierens eines zweiten Klassifikators Folgendes umfasst:

Trainieren (1311) eines Viola-Jones-Klassifikators unter Verwendung aller verfügbaren Normalmerkmalsvektoren und aller identifizierten Kernhandlungsmerkmalsvektoren, und
Trainieren (1312) des zweiten Klassifikators unter Verwendung aller verfügbaren Normalmerkmalsvektoren, die nicht durch den Viola-Jones-Klassifikator verworfen wurden, und aller Kernhandlungsmerkmalsvektoren, die nicht durch den Viola-Jones-Klassifikator verworfen wurden.

10. Verfahren nach Anspruch 8, ferner umfassend:

Trainieren (133) des zweiten Klassifikators unter Verwendung des zweiten Satzes von Normalmerkmalsvektoren und des Satzes von Kernhandlungsmerkmalsvektoren, was den trainierten zweiten Klassifikator ergibt.

11. Vorrichtung (60) zur Erzeugung eines trainierten zweiten Klassifikators zur Verwendung, um festzustellen, ob eine Datenabtastung zu einer normalen Klasse oder einer Handlungsklasse gehört, umfassend:

eine Verarbeitungseinheit (61), die dazu ausgebildet ist,

ein künstliches Raster zu erzeugen, das eine Anzahl von künstlichen Rasterpunkten x umfasst, wobei jeder künstliche Rasterpunkt ein Punkt im Raum mit der gleichen Abmessung wie jener einer Anzahl von Merkmalsvektoren ist, die einer Anzahl von Normaldatenabtastungen, welche in einer ersten Datenbank gespeichert sind, entspricht, wobei jeder Merkmalsvektor der Anzahl von Merkmalsvektoren eine erste Anzahl von Merkmalen umfasst, und jeder Merkmalsvektor unter Verwendung eines Merkmalsextraktionsalgorithmus aus jeder Normaldatenabtastung erzeugt wird, wobei das künstliche Raster so angeordnet ist, dass kein künstlicher Rasterpunkt des künstlichen Rasters näher als ein beliebiger aus der Anzahl von Merkmalsvektoren an dem Ursprung liegt;
unter Verwendung

der Anzahl von Normaldatenabtastungen, und
einer Bahn, die sich von dem Ursprung zu jedem der künstlichen Rasterpunkte $x$ erstreckt, wobei $t$ die Punkte auf der Bahn bezeichnet,

einen Klassifikator für jeden aus der Anzahl von künstlichen Rasterpunkten x zu trainieren, was einen ersten Satz von trainierten Klassifikatoren ergibt;
eine Anzahl von Kernhandlungsabtastungen, die entsprechende Merkmalsvektoren aufweist, welche unter Verwendung des Merkmalsextraktionsalgorithmus aus jeder Kernhandlungsabtastung erzeugt wurden, zu identifizieren, wobei die Merkmalsvektoren der Kernhandlungsabtastungen auf Basis des ersten Satzes von trainierten Klassifikatoren von den Merkmalsvektoren der Normaldatenabtastungen unterschieden werden, und Handlungsdatenabtastungen in einer zweiten Datenbank gespeichert werden; und
unter Verwendung der Normaldatenabtastungen und der Kernhandlungsabtastungen einen zweiten Klassifikator zum Trennen der Normaldatenabtastungen von den Kernhandlungsabtastungen zu trainieren.

12. Vorrichtung (60) nach Anspruch 1, ferner umfassend:

eine Detektionseinheit (62), die durch Extrahieren eines neuen Merkmalsvektors der neuen Datenabtastung und dann Anwenden des zweiten trainierten Klassifikators auf den neuen Merkmalsvektor feststellt, ob sich die neue Datenabtastung, die von einem Sensor erhalten wird, von der Normaldatenabtastung unterscheidet, und
eine Steuereinheit (63), um das Aufblasen eines Airbags (64) unter Verwendung eines Steuersignals zu steuern, wenn die neue Datenabtastung durch die Detektionseinheit (62) von der Normaldatenabtastung unterschieden wird.

13. Verwendung des Verfahrens nach Anspruch 1, um einen Airbag aufzublasen, wenn unter Verwendung des Verfahrens ein Unfall festgestellt wird.

**Revendications**

1. Procédé (10) de commande du gonflage d'un airbag, ou coussin gonflable, comprenant les étapes ci-dessous consistant à :

   créer une grille artificielle comprenant un nombre de points de grille artificielle « $x$ », dans lequel chaque point de grille artificielle correspond à un point dans l'espace présentant la même dimension que celle d'un nombre de vecteurs de caractéristiques correspondant à un nombre d'échantillons de données normaux stockés dans une première base de données, dans lequel chaque vecteur de caractéristiques du nombre de vecteurs de caractéristiques comprend un premier nombre de caractéristiques, et chaque vecteur de caractéristiques est créé à partir de chaque échantillon de données normal en faisant appel à un algorithme d'extraction de caractéristiques, dans lequel la grille artificielle est agencée de sorte qu'aucun point de grille artificielle de la grille artificielle n'est plus proche de l'origine qu'un quelconque vecteur du nombre de vecteurs de caractéristiques ;
   entraîner (11) un classifieur pour chaque point du nombre de points de grille artificielle « $x$ » en utilisant :

      le nombre d'échantillons de données normaux ; et
      une trajectoire s'étendant de l'origine jusqu'à chacun des points de grille artificielle « $x$ », dans lequel « $t$ » désigne les points sur la trajectoire, ce qui se traduit par un premier ensemble de classifieurs entraînés ;

   identifier (12) un nombre d'échantillons d'action de base présentant des vecteurs de caractéristiques correspondants qui sont créés à partir de chaque échantillon d'action de base, en utilisant l'algorithme d'extraction de caractéristiques, dans lequel les vecteurs de caractéristiques des échantillons d'actions de base sont différenciés des vecteurs de caractéristiques des échantillons de données normaux, sur la base du premier ensemble de classifieurs entraînés, et des échantillons de données d'action sont stockés dans une seconde base de données ;
   entraîner (13) un second classifieur destiné à séparer les échantillons de données normaux des échantillons d'actions de base, en utilisant les échantillons de données normaux et les échantillons d'actions de base ;
   détecter (14) si un nouvel échantillon de données reçu en provenance d'un capteur se différencie des échantillons de données normaux, en extrayant un nouveau vecteur de caractéristiques du nouvel échantillon de données, et en appliquant ensuite le second classifieur entraîné au nouveau vecteur de caractéristique, et le cas échéant créer (15) un signal de commande pour commander le gonflage d'un airbag, ou coussin gonflable.

2. Procédé selon la revendication 1, dans lequel l'étape d'apprentissage (11) d'un premier ensemble de classifieurs consiste à :

   mettre en oeuvre (111) une extraction de caractéristiques sur les échantillons de données normaux, ce qui se traduit par le fait qu'un vecteur de caractéristiques pour chaque échantillon de données normal présente un premier nombre de caractéristiques ;
   créer (112) une grille de points présentant la même dimension que les vecteurs de caractéristiques ;
   mettre en oeuvre (113) une itération pour chaque point de grille « $x$ » consistant à :

      sélectionner (113a) un point de grille « $x$ » à partir de la grille, créer (113b) une trajectoire du point « $x$ » à l'origine, avec un nombre de points défini par l'utilisateur, noter « $t$ » les points sur la trajectoire ;
      entraîner (113c) un classifieur en utilisant le premier nombre de vecteurs de caractéristiques en tant qu'une première classe et « $x$ » en tant qu'une seconde classe, ce qui se traduit par un classifieur entraîné ;
      classer (113d) « $t$ » avec le classifieur entraîné de l'étape (113c), noter « $tx$ » les points dans « $t$ » qui sont classés dans la classe « $x$ » ;
      entraîner (113e) un classifieur en utilisant le premier nombre de vecteurs de caractéristiques en tant que première classe et les points « $tx$ » en tant que seconde classe ;
      répéter (113f) l'étape de classement (113d) et l'étape d'apprentissage (113e) jusqu'à ce que le nouveau point « $tx$ » soit le même que celui entraîné, ou qu'une certaine durée, notée « temps d'exécution », définie par l'utilisateur, soit écoulée ;
      classer (113g) le premier nombre de vecteurs de caractéristiques avec le classifieur entraîné ;
      déterminer (113h) si un quelconque vecteur de caractéristiques des échantillons de données normaux est classé comme appartenant à la classe « $x$ », en classant chaque vecteur de caractéristiques des échantillons de données normaux avec le classifieur entraîné, et le cas échéant, supprimer le point de « *tx* » qui est le plus proche de l'origine, et répéter l'étape d'apprentissage (113e) ;

répéter (113i) l'étape de classement (113g) et l'étape de détermination (113h) jusqu'à ce que tous les vecteurs du premier nombre de vecteurs de caractéristiques soient classés comme appartenant à la première classe ; et

stocker (113j) le classifieur entraîné pour chaque point de grille « *x* », ce qui se traduit par un nombre de classifieurs entraînés, à savoir un classifieur entraîné pour chaque point de grille « *x* ».

3.  Procédé selon la revendication 2, dans lequel l'étape d'identification (12) d'un nombre d'échantillons d'action de base comporte les étapes ci-dessous consistant à :

mettre en oeuvre (121) une extraction de caractéristiques du nombre d'échantillons de données d'action stockés dans la seconde base de données, ce qui se traduit par un ensemble de vecteurs de caractéristiques d'action ;

classer (122) chaque vecteur de caractéristiques d'action avec chaque classifieur du premier ensemble de classifieurs, et si un vecteur de caractéristiques d'action est classé comme ne se rapportant pas à la première classe par l'un quelconque des classifieurs dans le premier ensemble de classifieurs, l'échantillon d'action correspondant pour chaque vecteur de caractéristiques classé est identifié en tant qu'un échantillon d'action de base.

4.  Procédé selon la revendication 3, comprenant en outre l'étape consistant à stocker (123) l'index de chaque échantillon d'action de base identifié dans un vecteur d'index.

5.  Procédé selon la revendication 1, dans lequel la seconde base de données comprend un nombre de fichiers de données d'action, décrivant chacun le déroulement des événements d'un accident sous la forme d'un nombre d'échantillons de données d'action, et des informations indiquant, pour chaque action, l'échantillon de données d'action dans lequel un événement donné, tel qu'un impact à la tête, est situé.

6.  Procédé selon la revendication 5, dans lequel lesdites étapes d'apprentissage (11) et d'identification (12) sont mises en oeuvre en exécutant une itération pour chaque fichier de données d'action dans la seconde base de données, ladite itération comprenant les étapes ci-dessous consistant à :

créer (1111) un ensemble de chaînes d'actions comprenant un premier vecteur de caractéristiques d'un échantillon de données d'action sélectionné associé à l'événement donné ;

entraîner (1112) un premier classifieur sur la base de l'ensemble de chaînes d'actions et d'un sous-ensemble A des échantillons de données normaux en vue de réaliser une séparation entre l'ensemble de chaînes d'actions et les vecteurs de caractéristiques extraits du sous-ensemble A ;

classer (1113) les vecteurs de caractéristiques en provenance d'un sous-ensemble B avec le premier classifieur, et si un quelconque vecteur de caractéristiques du sous-ensemble B est classé comme appartenant à la classe d'actions, l'itération est abandonnée ; et

classer (1114) tous les vecteurs de caractéristiques du fichier de données d'action en cours, correspondant à des échantillons de données d'action précédant l'événement donné, en utilisant le premier classifieur, et si aucun nouveau vecteur de caractéristiques n'est classé comme appartenant à la classe d'actions, l'itération est abandonnée, sinon l'ensemble de chaînes d'actions est défini comme comprenant tous les vecteurs de caractéristiques que le premier classifieur a classés comme appartenant à la classe d'actions ; et

dans lequel, dès lors que l'itération est abandonnée, l'ensemble de chaînes d'actions pour chaque fichier de données d'action comprend tous les vecteurs de caractéristiques d'action de base de chaque fichier de données d'action, et dans lequel les vecteurs de caractéristiques d'action de base correspondent à un nombre d'échantillons d'action de base.

7.  Procédé selon la revendication 6, comprenant en outre l'étape consistant à stocker l'index de chaque échantillon d'action de base identifié dans un vecteur d'index.

8.  Procédé selon la revendication 4 ou 7, comprenant en outre l'étape ci-dessous consistant à :

calculer un vecteur de caractéristiques de base pour chacun des échantillons d'actions de base indexés dans le vecteur d'index.

9.  Procédé selon la revendication 1 ou 8, dans lequel l'étape d'apprentissage d'un second classifieur comprend les étapes ci-dessous consistant à :

entraîner (1311) un classifieur de type « Viola et Jones » en utilisant tous les vecteurs de caractéristiques normaux disponibles, et tous les vecteurs de caractéristiques d'action de base identifiés ; et

entraîner (1312) le second classifieur en utilisant tous les vecteurs de caractéristiques normaux disponibles non abandonnés par le classifieur de type « Viola et Jones », et tous les vecteurs de caractéristiques d'action de base non abandonnés par le classifieur de type « Viola et Jones ».

10. Procédé selon la revendication 8, comprenant en outre l'étape ci-dessous consistant à :

entraîner (133) le second classifieur en utilisant le second ensemble de vecteurs de caractéristiques normaux et l'ensemble de vecteurs de caractéristiques d'action de base, ce qui se traduit par le second classifieur entraîné.

11. Dispositif (60) destiné à créer un second classifieur entraîné à utiliser en vue de détecter si un échantillon de données se rapporte à une classe normale ou à une classe d'actions, comprenant :

une unité de traitement (61) configurée de manière à :

créer une grille artificielle comprenant un nombre de points de grille artificielle « $x$ », dans lequel chaque point de grille artificielle correspond à un point dans l'espace présentant la même dimension que celle d'un nombre de vecteurs de caractéristiques correspondant à un nombre d'échantillons de données normaux stockés dans une première base de données, dans lequel chaque vecteur de caractéristiques du nombre de vecteurs de caractéristiques comprend un premier nombre de caractéristiques, et chaque vecteur de caractéristiques est créé à partir de chaque échantillon de données normal en faisant appel à un algorithme d'extraction de caractéristiques, dans lequel la grille artificielle est agencée de sorte qu'aucun point de grille artificielle de la grille artificielle n'est plus proche de l'origine qu'un quelconque vecteur du nombre de vecteurs de caractéristiques ;
entraîner un classifieur pour chaque point du nombre de points de grille artificielle « $x$ » en utilisant :

le nombre d'échantillons de données normaux ; et
une trajectoire s'étendant de l'origine jusqu'à chacun des points de grille artificielle « $x$ », dans lequel « $t$ » désigne les points sur la trajectoire, ce qui se traduit par un premier ensemble de classifieurs entraînés ;

identifier un nombre d'échantillons d'action de base présentant des vecteurs de caractéristiques correspondants qui sont créés à partir de chaque échantillon d'action de base, en utilisant l'algorithme d'extraction de caractéristiques, dans lequel les vecteurs de caractéristiques des échantillons d'actions de base sont différenciés des vecteurs de caractéristiques des échantillons de données normaux, sur la base du premier ensemble de classifieurs entraînés, et des échantillons de données d'action sont stockés dans une seconde base de données ; et
entraîner un second classifieur destiné à séparer les échantillons de données normaux des échantillons d'actions de base, en utilisant les échantillons de données normaux et les échantillons d'actions de base.

12. Dispositif (60) selon la revendication 11, comprenant en outre :

une unité de détection (62) qui détecte si un nouvel échantillon de données reçu en provenance d'un capteur se différencie des échantillons de données normaux, en extrayant un nouveau vecteur de caractéristiques du nouvel échantillon de données, et en appliquant ensuite le second classifieur entraîné au nouveau vecteur de caractéristique ; et
une unité de commande (63) pour commander le gonflage d'un airbag (64), en utilisant un signal de commande lorsque le nouvel échantillon de données est différencié des échantillons de données normaux par ladite unité de détection (62).

13. Utilisation du procédé selon la revendication 1 pour le gonflage d'un airbag lorsqu'un accident est détecté en utilisant le procédé.

Fig. 1

Fig. 2a

Fig. 2b

Fig. 2c

Fig. 2d

Fig. 3

Fig. 4a

Fig. 4b

Fig. 4c

Fig. 4d

Fig. 4e

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007050024 A

**Non-patent literature cited in the description**

- **WEIWEI WAN et al.** A hybrid HMM/SVM classifier for motion recognition using μTIMU data. *ROBOTICS AND BIOMIMETICS, 2007. ROBIO 2007. IEEE INTERNATIONAL CONFERENCE ON, IEEE,* 15 December 2007, ISBN 978-1-4244-1761-2, 115-120
- **XU Y WET.** A Cascaded Classifier for Pedestrian Detection. *INTELLIGENT VEHICLES SYMPOSIUM, 2006 IEEE MEGUROKU, JAPAN 13-15 JUNE 2006, PISCATAWAY, NJ, USA,IEEE,* 13 June 2006, ISBN 978-4-901122-86-3, 336-343
- **GUANGYI SHI et al.** Development of a Human Airbag System for Fall Protection Using MEMS Motion Sensing Technology. *INTELLIGENT ROBOTS AND SYSTEMS, 2006 IEEE/RSJ INTERNATIONAL CONFERENCE ON, IEEE, PI,* 01 October 2006, ISBN 978-1-4244-0258-8, 4405-4410